(19) Europäisches Patentamt / European Patent Office / Office européen des brevets

(11) **EP 3 808 162 B1**

(12) **EUROPEAN PATENT SPECIFICATION**

(45) Date of publication and mention
of the grant of the patent:
**30.08.2023 Bulletin 2023/35**

(51) International Patent Classification (IPC):
**A01B 29/04** (2006.01)   **A01B 29/06** (2006.01)
**A01B 49/02** (2006.01)

(21) Application number: **20202004.6**

(52) Cooperative Patent Classification (CPC):
**A01B 29/048; A01B 29/06; A01B 49/027**

(22) Date of filing: **15.10.2020**

(54) **SYSTEM AND METHOD FOR MONITORING PLUGGING OF BASKET ASSEMBLIES OF AN AGRICULTURAL IMPLEMENT**

SYSTEM UND VERFAHREN ZUR ÜBERWACHUNG DES VERSTOPFENS VON WALZENANORDNUNGEN EINES LANDWIRTSCHAFTLICHEN ANBAUGERÄTS

SYSTÈME ET PROCÉDÉ DE SURVEILLANCE D'OBSTRUCTION D'ENSEMBLES DE ROULEAUX D'UN EQUIPEMENT AGRICOLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.10.2019 US 201916653129**

(43) Date of publication of application:
**21.04.2021 Bulletin 2021/16**

(73) Proprietor: **CNH Industrial Belgium N.V.**
**8210 Zedelgem (BE)**

(72) Inventors:
• **ESPINOSA, Raul**
**Cranberry Township, PA 16066 (US)**
• **GLOVIER, Scott**
**Lombard, IL 60148 (US)**
• **PAXINOS, Heather Humpreys**
**Pittsburgh, PA 15201 (US)**

(74) Representative: **CNH Industrial IP Department**
**Leon Claeysstraat 3A**
**8210 Zedelgem (BE)**

(56) References cited:
**EP-A1- 3 011 815    WO-A1-2021/030519**

**Description**

FIELD OF THE INVENTION

The present disclosure generally relates to agricultural implements and, more particularly, to systems and methods for monitoring plugging of rolling basket assemblies of an agricultural implement.

BACKGROUND OF THE INVENTION

It is well known that, to attain the best agricultural performance from a field, a farmer must cultivate the soil, typically through a tillage operation. Modern farmers perform tillage operations by pulling a tillage implement behind an agricultural work vehicle, such as a tractor. Tillage implements typically include one or more ground engaging tools configured to engage the soil as the implement is moved across the field. For example, in certain configurations, the implement may include one or more harrow disks, leveling disks, rolling baskets, shanks, tines, and/or the like. Such ground engaging tool(s) loosen, agitate, and/or otherwise work the soil to prepare the field for subsequent planting operations.

During tillage operations, field materials, such as residue, soil, rocks, mud, and/or the like, may become trapped or otherwise accumulate on and/or within ground engaging tools or between adjacent ground engaging tools. For instance, material accumulation will often occur around the exterior of a basket assembly (e.g., on the blades or bars of the basket assembly) and/or within the interior of the basket assembly. Such accumulation of field materials or "plugging" of the basket assembly may prevent the basket assembly from performing in a desired manner during the performance of a tillage operation. In such instances, it is often necessary for the operator to take certain corrective actions to remove the material accumulation. However, it is typically difficult for the operator to detect or determine a plugged condition of a basket assembly when viewing the tools from the operator's cab.

Document EP 3 011 815 A1 discloses an agricultural implement with an implement controller configured to activate a visual alarm if it determines that one of disk gangs is plugged and configured to activate a visual alarm if it determines that one of rolling baskets is plugged.

Accordingly, an improved system and method for monitoring plugging of basket assemblies of an agricultural implement would be welcomed in the technology.

SUMMARY OF THE INVENTION

Aspects and advantages of the technology will be set forth in part in the following description, or may be obvious from the description, or may be learned through practice of the technology.

In one aspect, the present subject matter is directed to a system for monitoring basket plugging for agricultural implements. The system includes a basket assembly configured to be supported by an agricultural implement, where the basket assembly defines a lateral width between opposed lateral ends of the basket assembly. The system further includes a plugging sensor positioned relative to the basket assembly such that the plugging sensor is configured to transmit detection signals across a field of detection towards an interior of the basket assembly and receive return signals based on reflection of the detection signals off at least one surface. The field of detection extends laterally across at least a portion of the lateral width of the basket assembly such that the plugging sensor transmits the detection signals towards multiple locations defined along the at least a portion of the lateral width of the basket assembly. The system also includes a controller communicatively coupled to the plugging sensor. The controller is configured to analyze data received from the plugging sensor as the basket assembly rotates relative to the plugging sensor to determine when the basket assembly is experiencing a plugged condition.

In another aspect, the present subject matter is directed to an agricultural implement that includes a frame, a basket assembly configured to be supported by the frame, and a plugging sensor supported relative to the basket assembly such that the plugging sensor has a field of detection directed towards an interior of the basket assembly. The basket assembly defines a lateral width between opposed lateral ends of the basket assembly. The plugging sensor is configured to generate data associated with a distance between the plugging sensor and at least one surface aligned with the field of detection as the basket assembly is rotated relative to the plugging sensor. The field of detection extends laterally across at least a portion of the lateral width of the basket assembly such that the data generated by the plugging sensor is associated with multiple locations defined along the at least a portion of the lateral width of the basket assembly. The implement further includes a controller communicatively coupled to the plugging sensor. The controller is configured to analyze the data received from the plugging sensor to determine when the basket assembly is experiencing a plugged condition.

In a further aspect, the present subject matter is directed to a method for monitoring plugging of basket assemblies of agricultural implements. The method includes transmitting, with a plugging sensor, detection signals towards an interior of a basket assembly of an agricultural implement and across a field of detection of the plugging sensor extending along at least a portion of a lateral width of the basket assembly as the basket assembly is rotating. The method further includes receiving return signals from multiple locations defined across at least one surface positioned within the field of detection of the plugging sensor based on reflection of the detection signals off the at least one surface. In addition, the method includes analyzing, with a computing device, data associated at least in part with the return signals to determine when the basket assembly is experiencing a plugged condition.

These and other features, aspects and advantages of the present technology will become better understood with reference to the following description and appended claims. The accompanying drawings, which are incorporated in and constitute a part of this specification, illustrate embodiments of the technology and, together with the description, serve to explain the principles of the technology.

BRIEF DESCRIPTION OF THE DRAWINGS

A full and enabling disclosure of the present technology, including the best mode thereof, directed to one of ordinary skill in the art, is set forth in the specification, which makes reference to the appended figures, in which:

FIG. 1 illustrates a perspective view of one embodiment of an agricultural implement coupled to a work vehicle in accordance with aspects of the present subject matter;

FIG. 2 illustrates another perspective view of the agricultural implement shown in FIG. 1 in accordance with aspects of the present subject matter;

FIG. 3 illustrates a partial perspective view of basket assemblies positioned at an aft end of the implement shown in FIGS. 1 and 2, particularly illustrating one embodiment of a system for monitoring plugging of the basket assemblies in accordance with aspects of the present subject matter;

FIGS. 4A and 4B illustrate schematic, simplified cross-sectional views of one of the basket assemblies shown in FIG. 3 when such basket assembly is a non-plugged state, particularly illustrating a plugging sensor of the disclosed system installed relative to the basket assembly for detecting material accumulation on or within the basket assembly in accordance with aspects of the present subject matter;

FIGS. 5A and 5B illustrate similar schematic, simplified cross-sectional view of the basket assembly shown in FIGS. 4A and 4B, but with the basket assembly now in a fully plugged state, particularly illustrating the plugging sensor being used to detect material accumulation within the basket assembly in accordance with aspects of the present subject matter;

FIG. 6A illustrates an exemplary plot showing an example data trace or profile associated with the sensor data collected across the basket assembly by a plugging sensor of the disclosed system when a basket assembly is in a non-plugged state in accordance with aspects of the present subject matter;

FIG. 6B illustrates an exemplary plot showing an example data trace or profile associated with the sensor data collected across the basket assembly by a plugging sensor of the disclosed system when a basket assembly is in a plugged state in accordance with aspects of the present subject matter;

FIG. 7A illustrates another exemplary plot showing an example data trace or profile associated with the sensor data collected over a period of time for a section of the basket assembly by a plugging sensor of the disclosed system when the basket assembly is in a non-plugged state in accordance with aspects of the present subject matter;

FIG. 7B illustrates another exemplary plot showing an example data trace or profile associated with the sensor data collected over a period of time for a section of the basket assembly by a plugging sensor of the disclosed system when a section of the basket assembly becomes plugged in accordance with aspects of the present subject matter;

FIG. 8 illustrates a schematic view of one embodiment of a system for monitoring plugging of a basket assembly of an agricultural implement in accordance with aspects of the present subject matter; and

FIG. 9 illustrates a flow diagram of one embodiment of a method for monitoring plugging of a basket assembly of an agricultural implement in accordance with aspects of the present subject matter.

Repeat use of reference characters in the present specification and drawings is intended to represent the same or analogous features or elements of the present technology.

DETAILED DESCRIPTION OF THE DRAWINGS

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope of the invention which is defined by the appended claims. For instance, features illustrated or described as part of one embodiment can be used with another embodiment to yield a still further embodiment. Thus, it is intended that the present invention covers such modifications and variations as long as they come within the scope of the appended claims.

In general, the present subject matter is directed to systems and methods for monitoring plugging of one or more basket assemblies of an agricultural implement. Specifically, in several embodiments, the disclosed system may include one or more plugging sensors supported relative to a given basket assembly such that each plugging sensor is configured to transmit detection signals towards an interior of the basket assembly. In addition, each plugging sensor may be configured to detect return signals corresponding to the detection signals as reflected off a detected surface(s). By analyzing the return signals received by each plugging sensor and/or any data associated with the signals, a controller or computing device of the system may infer or determine that the corresponding basket assembly is currently plugged or experiencing a plugged condition. For instance, in one embodiment, the controller may be configured to assess the data trace or profile of the sensor data received from each plugging sensor to identify the existence of material accumulation on and/or within the basket assembly. Once it is determined that the basket assembly is experiencing a plugged condition, an appropriate control action may then be executed, such as by notifying the operator of the plugged condition or by performing an automated control action.

In accordance with aspects of the present subject matter, each plugging sensor may be capable of transmitting multiple detection signals and detecting multiple return signals across a given lateral width of the basket. For instance, each plugging sensor may be configured as an array or multi-point sensor (e.g., a LIDAR device or multi-ray LED sensor) that has a field of detection extending across a two-dimensional plane, thereby allowing the sensor to generate plugging-related data associated with multiple different locations across such two-dimensional plane. As such, a single plugging sensor may monitor plugging across all or a significant portion of the basket width, which may reduce the costs and the complexity associated with detecting plugging of basket assemblies.

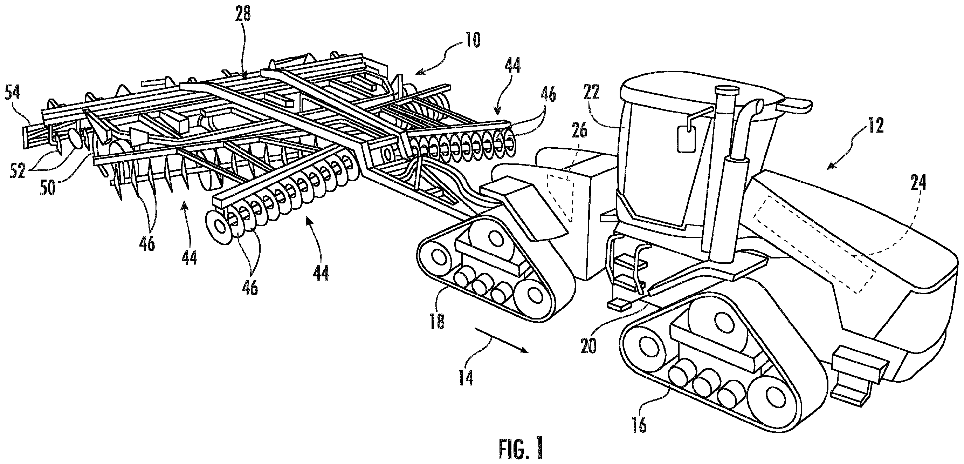

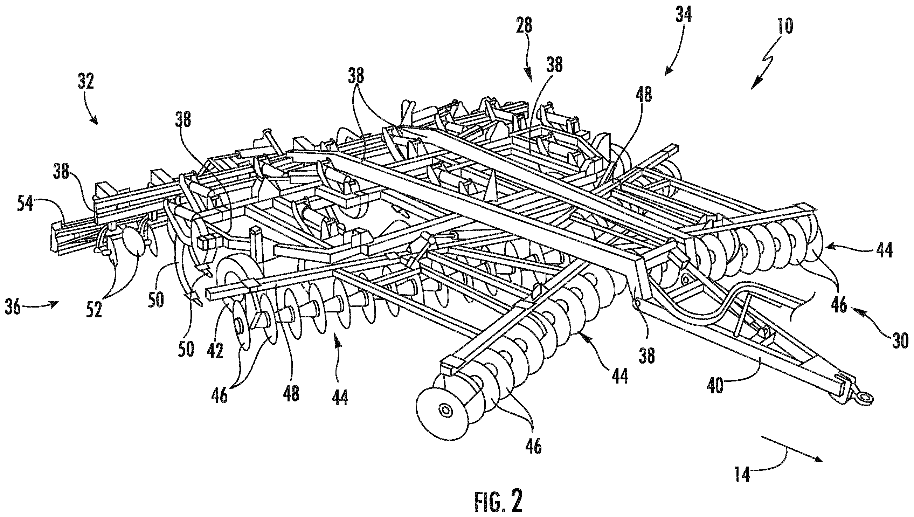

Referring now to the drawings, FIGS. 1 and 2 illustrate differing perspective views of one embodiment of an agricultural implement 10 in accordance with aspects of the present subject matter. Specifically, FIG. 1 illustrates a perspective view of the agricultural implement 10 coupled to a work vehicle 12. Additionally, FIG. 2 illustrates a perspective view of the implement 10, particularly illustrating various components of the implement 10.

In general, the implement 10 may be configured to be towed across a field in a direction of travel (e.g., as indicated by arrow 14 in FIG. 1) by the work vehicle 12. As shown, the implement 10 may be configured as a tillage implement, and the work vehicle 12 may be configured as an agricultural tractor. However, in other embodiments, the implement 10 may be configured as any other suitable type of implement, such as a seedplanting implement, a fertilizer-dispensing implement, and/or the like. Similarly, the work vehicle 12 may be configured as any other suitable type of vehicle, such as an agricultural harvester, a self-propelled sprayer, and/or the like.

As shown in FIG. 1, the work vehicle 12 may include a pair of front track assemblies 16, a pair or rear track assemblies 18, and a frame or chassis 20 coupled to and supported by the track assemblies 16, 18. However, in other embodiments, the work vehicle 12 may include wheels (not shown) in place of the front and/or rear track assemblies 16, 18. An operator's cab 22 may be supported by a portion of the chassis 20 and may house various input devices for permitting an operator to control the operation of one or more components of the work vehicle 12 and/or one or more components of the implement 10. Additionally, as is generally understood, the work vehicle 12 may include an engine 24 and a transmission 26 mounted on the chassis 20. The transmission 26 may be operably coupled to the engine 24 and may provide variably adjusted gear ratios for transferring engine power to the track assemblies 16, 18 via a drive axle assembly (not shown) (or via axles if multiple drive axles are employed).

As shown in FIGS. 1 and 2, the implement 10 may include a frame 28. More specifically, as shown in FIG. 2, the frame 28 may extend longitudinally between a forward end 30 and an aft end 32. The frame 28 may also extend laterally between a first side 34 and a second side 36. In this respect, the frame 28 generally includes a plurality of structural frame members 38, such as beams, bars, and/or the like, configured to support or couple to a plurality of components. Furthermore, a hitch assembly 40 may be connected to the frame 28 and configured to couple the implement 10 to the work vehicle 12. Additionally, a plurality of wheels 42 (one is shown) may be coupled to the frame 28 to facilitate towing the implement 10 in the direction of travel 14.

In several embodiments, the frame 28 may be configured to support various ground engaging tools. For instance, the frame 28 may support one or more gangs or sets 44 of disk blades 46. Each disk blade 46 may be configured to penetrate into or otherwise engage the soil as the implement 10 is being pulled through the field. In this regard, the various disk gangs 44 may be oriented at an angle relative to the direction of travel 14 to promote more effective tilling of the soil. In the embodiment shown in FIGS. 1 and 2, the implement 10 includes four disk gangs 44 supported on the frame 28 adjacent to its forward end 30. However, it should be appreciated that, in alternative embodiments, the implement 10 may include any other suitable number of disk gangs 44, such as more or fewer than four disk gangs 44. Furthermore, in one embodiment, the disk gangs 44 may be mounted to the frame 28 at any other suitable location, such as adjacent to its aft end 32. Additionally, the disk blades 46 may alternatively be individually supported on the frame 28 instead of being ganged together.

Additionally, as shown, in one embodiment, the implement frame 28 may be configured to support other ground engaging tools. For instance, in the illustrated embodiment, the frame 28 is configured to support a plurality of shanks 50 configured to rip or otherwise till the soil as the implement 10 is towed across the field. Furthermore, in the illustrated embodiment, the frame 28 is also configured to support one or more finishing tools, such as a plurality of leveling blades 52 and/or rolling (or crumbler) basket assemblies 54. However, in other embodiments, any other suitable ground-engaging tools may be coupled to and supported by the implement frame 28, such as a plurality of closing disks, spikes, tines, and/or the like.

It should be appreciated that the configuration of the work vehicle 12 and the implement 10 described above and shown in FIGS. 1 and 2 are provided only to place the present subject matter in an exemplary field of use. Thus, it should be readily apparent that the present subject matter may be readily adaptable to any manner of machine configuration.

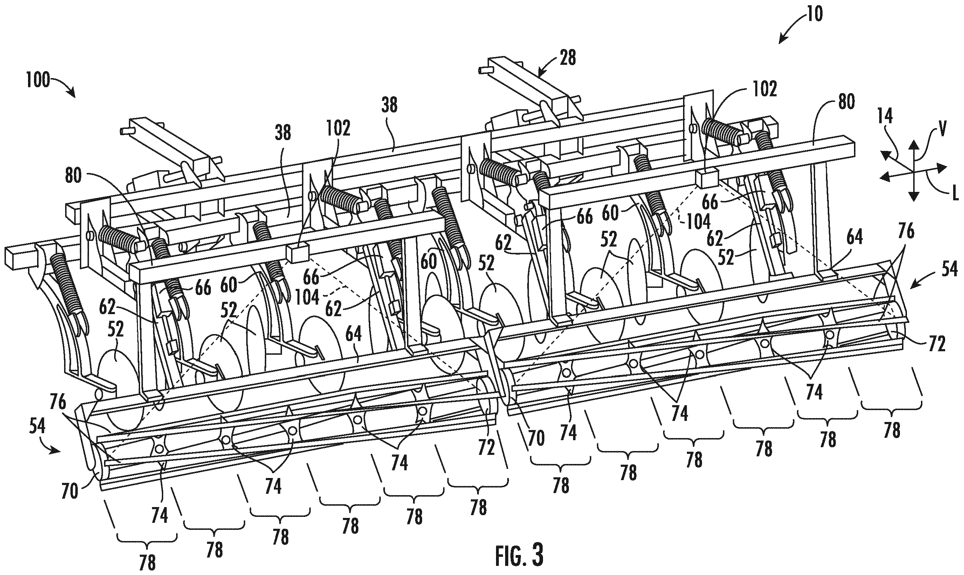

Referring now to FIG. 3, a partial, perspective view of the aft end of the implement 10 shown in FIGS. 1 and 2 is illustrated in accordance with aspects of the present subject matter, particularly illustrating a portion of the finishing tools 52, 54 of the implement 10. As shown, the various finishing tools 52, 54 may be coupled to or supported by the implement frame 28, such as by coupling each tool to a toolbar or frame member 38 of the frame 28 extending along a lateral direction of the implement 10 (e.g., as indicated by arrow L) . For instance, as shown in FIG. 3, a blade support arm 60 may be coupled between a given frame member 38 and each leveling blade 52 or set of leveling blades 52 to support the blades 52 relative to the frame 28. Similarly, one or more basket support arms 62 may be coupled between a given frame member 38 and an associated mounting yoke or basket hanger 64 for supporting each basket assembly 54 relative to the frame 28. Additionally, as shown in FIG. 3, in one embodiment, a basket actuator 66 (e.g., a hydraulic or pneumatic cylinder) may be coupled to each basket support arm 62 to allow the down force or down pressure applied to each basket assembly 54 to be adjusted. The basket actuators 66 may also allow the basket assemblies 54 to be raised off the ground, such as when the implement 10 is making a headland turn and/or when the implement 10 is being operated within its transport mode.

In several embodiments, each basket assembly 54 includes a plurality of support plates 70, 72, 74 configured to support a plurality of blades or bars 76 (hereinafter referred to simply as "bars 76" for the sake of simplicity and without intent to limit) spaced circumferentially about the outer perimeter of the basket. For instance, as shown in FIG. 3, each basket assembly 54 includes first and second end plates 70, 72 positioned at the opposed lateral ends of the basket assembly 54 and a plurality of inner support plates 74 spaced apart laterally from one another between the end plates 70, 72. Lateral basket sections 78 are generally defined between each pair of adjacent support plates 70, 72, 74, with each basket section 78 being generally characterized by a hollow or substantially hollow interior area surrounded by the lateral portions of the bars 76 extending between the respective pair of adjacent support plates 70, 72, 74. As is generally understood, the end plates 70, 72 may be rotatably coupled to the corresponding basket hanger 64 (which, in turn, is coupled to the associated bracket support arm(s) 62) via bearings to allow the basket assembly 54 to rotate relative to the hanger/arm 64, 62 as implement 10 is being moved across the field. Additionally, in the illustrated embodiment, the bars 76 of each basket assembly 54 are configured as formed bars. However, in other embodiments, the bars 76 may have any other suitable configuration, such as flat bars, round bars, and/or the like.

Moreover, in accordance with aspects of the present subject matter, FIG. 3 also illustrates components of one embodiment of a system 100 for monitoring plugging of one or more basket assemblies of an agricultural implement. Specifically, in the illustrated embodiment, the system 100 is shown as being configured for use in identifying and monitoring a plugged condition(s) of the depicted basket assemblies 54. However, in other embodiments, the system 100 may be utilized to monitor plugging of basket assemblies having any other suitable configuration.

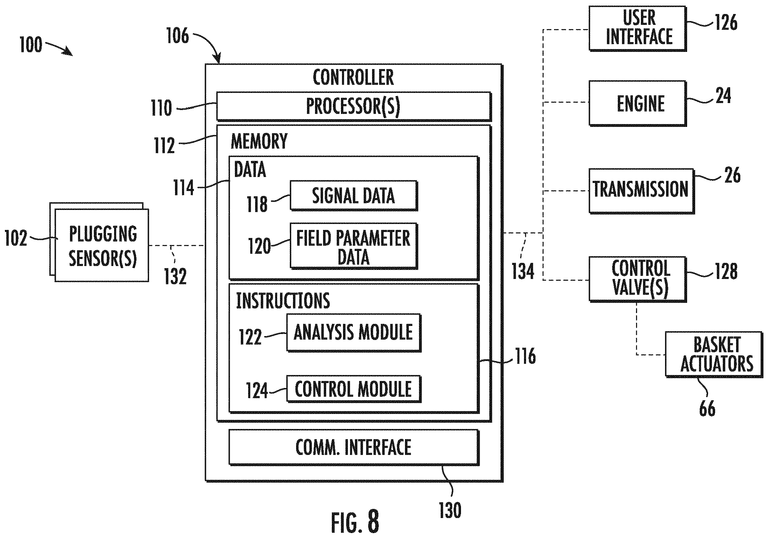

As shown in FIG. 3, the system 100 includes a plugging sensor 102 installed on the implement 10 at a location relative to each basket assembly 54 such that each plugging sensor 102 is configured to provide data indicative of a plugged condition of the respective basket assembly 54. Specifically, in several embodiments, each plugging sensor 102 may be installed relative to an adjacent basket assembly 54 such that each plugging sensor 102 has a field of view or detection 104 directed towards the interior of the basket assembly 54. The field of view 104 may extend along at least a portion of a lateral width of the basket assembly 54 extending between the end plates 70, 72. For instance, in one embodiment, the field of view 104 may extend along the entire lateral width of the basket assembly 54. Further, in one embodiment, the field of view 104 may extend across a two-dimensional plane, such as a plane intersecting the plugging sensor 102 and a center of the basket 105, so that the plugging sensor 102 can detect plugging at multiple locations or points along its field of view 104. Each plugging sensor 102 may thus be configured to transmit detection signals along the entire field of view 104 of the plugging sensor 102 and subsequently receive return signals corresponding to the detection signals as reflected off a given surface aligned with the field of view 104, such as an outer surface of the bars 76 or the surface(s) of field materials that have accumulated on and/or within the basket assembly. By analyzing the return signals via an associated controller 106 (FIG. 8) communicatively coupled to the plugging sensor 102, the controller 106 may be configured to identify the presence of material accumulation on or within the basket assembly 54 at multiple locations along the lateral width of the basket assembly 54.

For instance, the return signals received by each plugging sensor 102 may be indicative of the distance defined between the sensor 102 and the corresponding reflection surface. In this regard, as the basket assembly 54 is rotated relative to its respective plugging sensor 102, the detection signals transmitted from such plugging sensor 102 at any given point in time will either be directed towards one of the bars 76 surrounding the interior of the basket assembly 54 or the open space defined between adjacent bars 76, depending on the rotational orientation of the basket assembly 54 relative to the plugging sensor 102 at such point in time. As a result, when the adjacent basket assembly 54 is in a normal, un-plugged state (e.g., the interior of the basket assembly 54 is not occupied by field materials), the distance-related data associated with the return signals received by each plugging sensor 102 will generally correspond to return signals being reflected off of the spaced apart bars 76 and return signals being reflected off of a bottom of the basket assembly 54 or the ground surface below a center of the basket assembly 54. However, as field materials accumulate within the interior of the basket assembly 54, the detection signals directed from each plugging sensor 102 towards the open areas defined between adjacent bars 76 will bounce or reflect off the accumulated materials, thereby altering the data trace or profile of the distance-related data associated with the return signals received by the plugging sensor 102. Similarly, as field materials accumulate around the outer perimeter of the basket assembly 54 (e.g. on the bars 76), the detection signals directed from each plugging sensor 102 will bounce or reflect off the accumulated materials as opposed to reflecting off the bars 76 or being transmitted into the interior of the basket assembly 54, thereby altering the data profile of the distance-related data associated with the return signals received by the plugging sensor 102. Accordingly, by recognizing variations in the data profile (particularly variations indicative of a reduction in the distance detected between the sensor 102 and an associated reflection surface), the controller 106 may infer or estimate that the basket assembly 54 is experiencing a plugged condition. Once a plugged condition is detected, an appropriate control action may then be executed, such as by notifying the operator of the plugged condition or by performing an automated control action.

In general, the plugging sensors 102 may correspond to any suitable distance sensors, proximity sensors, and/or the like that are configured to collect data indicative of a distance or range defined between such sensors 102 and a given object/surface across a field of view extending across multiple points or locations (e.g., within a two-dimensional plane), such as at different points along a lateral width of a basket assembly. For instance, in one embodiment, each plugging sensor 102 may correspond to an optical distance sensor, such as a LIDAR sensor. In another embodiment, each plugging sensor 102 may correspond to a multi-ray LED sensor. LIDAR distance sensors suitable for use within the disclosed system 100 are commercially available from various sources, including, for example, from SICK AG of Waldkirch, Germany, and multi-ray LED distance sensors suitable for use within the disclosed system 100 are commercially available from various sources, including, for example, from Pepperl & Fuchs of Mannheim, Germany. In other embodiments, each plugging sensor 102 may correspond to any other suitable distance or proximity sensor or sensing device having field of views capable of sensing plugging at multiple locations along a given detection plane or lateral width of a basket assembly, such as a radar-based distance sensor, an inductance-based distance sensor, an infraredbased distance sensor, ultrasound-based distance sensor, and/or the like.

As shown in FIG. 3, each plugging sensor 102 is mounted to the basket hanger 64 supporting the respective basket assembly 54 relative to the implement frame 28 (e.g., via the associated basket support arm 62) in a manner such that each plugging sensor 102 has a downwardly oriented field of view 104 directed towards the adj acent basket assembly 54. Specifically, in the illustrated embodiment, the plugging sensor 102 is supported by a sensor frame 80 mounted to the basket hanger 64 such that the plugging sensor 102 has a substantially downwardly oriented field of view 104 directed towards the interior of each lateral basket section 78 of the adjacent basket assembly 54. In some embodiments, the field of view 104 is oriented downwardly along a vertical direction (e.g., as indicated by arrow V), perpendicular to the direction of travel 14 and the lateral direction L. Further, the plugging sensor 102 may be mounted above the respective basket assembly 54 such that the field of view 104 extends across a substantial portion of the lateral width of basket assembly 54. As a result, each plugging sensor 102 may allow for the plugging state across multiple basket sections 78 to be monitored. However, in other embodiments, the plugging sensors 102 may be mounted at any other suitable location relative to the basket assembly 54 that allows each plugging sensor 102 to have a field of view directed towards the interior of an associated basket assembly 54. Additionally, although the illustrated embodiment shows a specific number of plugging sensors 102 installed relative to each basket assembly 54 (e.g., one per basket assembly 54), the system 100 may generally include any suitable number of plugging sensors 102, including a two or more plugging sensors 102 for each basket assembly 54.

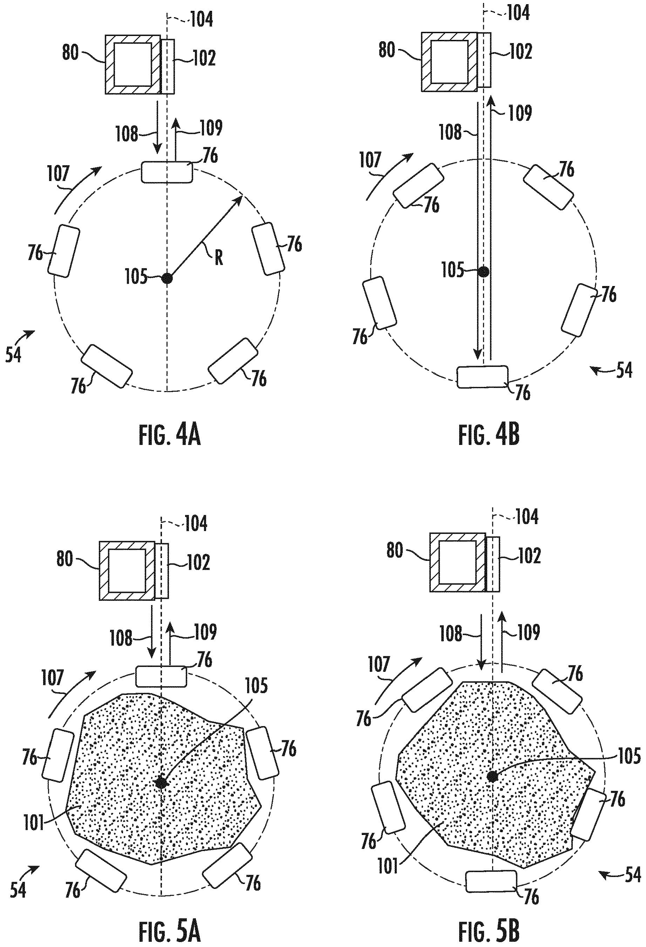

Referring now to FIGS. 4A and 4B and FIGS. 5A and 5B, schematic, simplified cross-sectional views of one of the basket assemblies 54 shown in FIG. 3 are illustrated in accordance with aspects of the present subject matter. Specifically, FIGS. 4A and 4B illustrate the basket assembly 54 in a non-plugged state such that the basket interior and exterior is completely devoid of material accumulation. Additionally, FIGS. 5A and 5B illustrates the basket assembly 54 when it is experiencing an internal plugged condition such that the basket interior includes field materials (indicated by mass 101) accumulated therein. For purposes of illustration, the basket assembly 54 of FIGS. 5A and 5B is shown in an almost fully plugged state. However, those of ordinary skill in the art will appreciate that basket assemblies can experience varying degrees of plugged conditions, such as ranging from a partially plugged condition to a fully plugged condition.

As shown in FIGS. 4A, 4B, 5A, and 5B, the plugging sensor 102 is coupled to the adjacent sensor frame 80, which is coupled to the adjacent basket hanger 64 as described above, such that the sensor 102 has a field of view 104 oriented towards the interior of the basket assembly 54. Specifically, in the illustrated embodiment, the field of view 104 of the sensor 102 is directed towards a center 105 of the basket assembly 54, which may also correspond to the location of the rotational axis of the basket assembly 54. However, in other embodiments, the field of view 104 of the plugging sensor 102 may be directed towards any other location(s) within the interior of the basket assembly 54, such as any off-center location.

As particularly shown in FIGS. 4A and 4B, as the non-plugged basket assembly 54 rotates in a given rotational direction (e.g., as indicated by arrow 107) across the ground (and relative to the sensor 102) during the performance of an agricultural operation (e.g., a tillage operation), the field of view 104 of the plugging sensor 102 alternates from being aligned with one of the bars 76 of the basket assembly 54 to being aligned with the open area or gap defined adjacent bars 76. For example, in the snapshot shown in FIG. 4A, the field of view 104 is aligned with one of the bars 76 of the basket assembly 54. As a result, the detection signals (indicated by arrow 108) transmitted from the plugging sensor 102 may reflect off the outer surface of the aligned bar 76 and be directed back to the plugging sensor 102 as return signals (indicated by arrow 109). Such return signals 109 may then be analyzed, for example, to identify the distance between the sensor 102 and the aligned bar 76 or, as will be described below, the distance between the aligned bar 76 and the basket center 105.

In contrast, in the subsequent snapshot shown in FIG. 4B in which the basket assembly 54 has rotated slightly in the rotational direction 107 from the position shown in FIG. 4A, the field of view 104 is aligned with the open space defined between adjacent bars 76 of the basket assembly 54. As a result, the detection signals 108 transmitted from the plugging sensor 102 may pass between the adjacent bars 76 and through the open interior of the basket assembly 54 to the basket center 105 or beyond and may reflect off the inner surface of an aligned bar 76 or the ground surface (not shown) and be directed back to the plugging sensor 102 as return signals 109. Such return signals 109 may similarly be analyzed to identify the distance between the sensor 102 and the aligned bar 76 (or ground surface) or, as will be described below, the distance between the aligned bar 76 (or ground surface) and the basket center 105.

As the basket assembly 54 is further rotated in the rotational direction 107 from the position shown in FIG. 4B, the next adjacent bar 76 will pass through the field of view 104 of the plugging sensor 102, thereby allowing the sensor 102 to detect the bar. Such alternating pattern will be repeated as the basket assembly 54 rotates relative to the plugging sensor 102 during operation of the agricultural implement.

It should be appreciated that, while the plugging sensor 102 has a detection range described and illustrated herein corresponding to the distance defined between the sensor 102 and the ground (or the opposed side of the basket assembly 54 in contact with the ground during a tillage operation), the plugging sensor 102 may have any other suitable detection range. For instance, in another embodiment, the detection range may be selected to correspond to the distance defined between the sensor 102 and the basket center 105. In general, plugging can be inferred when material accumulation is detected much closer than the inner surface of a bar 76 at an opposite side of the basket assembly 54 from the plugging sensor 102, such as when material accumulation occurs above the basket center 105, when material accumulation is built up on the blades, but not past the center, etc. As such, when the field of view 104 for the plugging sensor 102 is aligned with the open space between adjacent bars 76 (e.g., as shown in FIG. 4B), the detection signals 108 may be transmitted through the interior of the basket assembly 54 towards the basket center 105. During a non-plugging condition, when the field of view 104 for the plugging sensor 102 is aligned with the open space between adjacent bars 76 (e.g., as shown in FIG. 4B), the detection signals 108 have nothing to reflect off, e.g., no accumulation at the basket center 105, such that the return signals received by the sensor 102 are indicative of the ground surface or bars on the lower side of the basket assembly 54. Conversely, when the field of view 104 for the plugging sensor 102 is aligned with the open space between adjacent bars 76 (e.g., as shown in FIG. 4B), but the detection signals bounce off surfaces at or above the inner surface of the bar 76 opposite the sensor 102, such as at or above the basket center 105, the received return signals are indicative of a plugging condition.

When the basket assembly 54 is experiencing a plugged condition, the same alternating pattern will be repeated as the basket assembly 54 rotates relative to the plugging sensor 102 during operation of the agricultural implement, with the field of view 104 alternating between being aligned with one of the bars 76 of the basket assembly 54 and being aligned with the open space defined between adjacent bars 76. For instance, the field of view 104 of the plugging sensor 102 is aligned with one of the bars 76 of the basket assembly 54 in the snapshot shown in FIG. 5A, while the field of view 104 is aligned with the open space defined between adjacent bars 76 in the snapshot shown in FIG. 5B. However, unlike the non-plugged state described above with reference to FIGS. 4A and 4B, the detection signals 108 transmitted from the plugging sensor 102 will not pass through the interior of the basket assembly 54 to its center 105 when the field of view 104 is aligned with the open space defined between adjacent bars 76 due to the presence of material accumulation within the interior of the basket assembly 54. Specifically, as shown in FIG. 5B, the detection signals 108 transmitted from the plugging sensor 102 reflect off the outer surface(s) of the accumulated material 101 and are directed back to the plugging sensor 102 as return signals 109. Such return signals 109 may then be analyzed, for example, to identify the distance between the sensor 102 and the accumulated materials 101 (or, as will be described below, to identify distance between the accumulated materials 101 and the basket center 105 via a linear transformation). When such material accumulation is detected, it may be inferred or determined that the basket assembly 54 is experiencing a plugged condition.

It should be appreciated that, although not shown, the basket assembly 54 may also experience an external plugging condition in which field materials accumulate along the outer perimeter of the basket assembly 54, such as on or between the bars 76. In such instance, the plugging sensor 102 may detect the material accumulation in a manner similar to that described. For instance, material accumulation on the bars 76 will result in a reduction in the distance detected between the sensor and the expected location of the bars 76. Similarly, material accumulation directly between the bars 76 will prevent the detection signals 108 from being transmitted through the interior of the basket assembly 54, which may be detected by the plugging sensor 102 via the associated return signals 109 reflecting off the accumulated materials.

It should be appreciated that the cross-sectional configuration of the bars 76 of the basket assembly 54 described above and shown in FIGS. 4A-5B are simplified for purposes of illustration. Thus, it should be readily apparent that the bars 76 may have any other suitable cross-section.

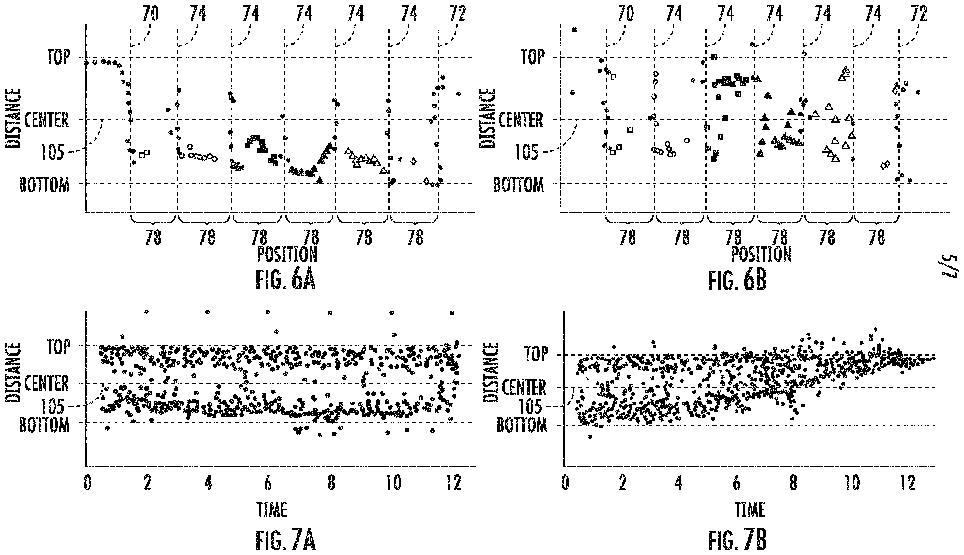

Referring now to FIGS. 6A-7B, exemplary charts are provided that illustrate example data traces or profiles associated with the sensor data provided by the plugging sensor 102 in the non-plugged/plugged scenarios described above with reference to FIGS. 4A and 4B and FIGS. 5A and 5B. Specifically, FIG. 6A illustrates an exemplary data profile associated with the return signals 109 received by the plugging sensor 102 from different positions across the entire lateral width of basket assembly 54 at one instant in time while the basket assembly 54 is in the non-plugged state shown in FIGS. 4A and 4B. Similarly, FIG. 6B illustrates an exemplary data profile associated with the return signals 109 received by the plugging sensor 102 from different positions across the entire lateral width of the basket assembly 54 at one instant in time while the basket assembly 54 is in the plugged state shown in FIGS. 5A and 5B. FIG. 7A illustrates an exemplary data profile associated with the return signals 109 received by the plugging sensor 102 from a single lateral position along the lateral width of the basket assembly 54 while the basket assembly 54 is in a non-plugged state across a period of operation. Additionally, 7B illustrates an exemplary data profile associated with the return signals 109 received by the plugging sensor 102 from a single lateral position along the lateral width of the basket assembly 54 while the basket assembly 54 becomes plugged across a period of operation.

It should be appreciated that the data collected from the plugging sensor 102 is generally indicative of the distance defined between the sensor 102 and the detected surface(s). However, for purposes of illustration, the sensor data has been plotted as a function of the distance of the detected surface from the center 105 of the basket assembly 54. Such center-referenced data may be obtained via a linear transformation. In doing so, any sensor measurements that extend beyond the center 105 of the basket assembly 54 may be presented as negative values relative to the basket center 105.

FIGS. 6A and 6B each show a set of data points that is determined from sensor data collected by the plugging sensor 102 across the entire lateral width of the basket assembly 54 at a respective instant in time. Due to the orientation of the plugging sensor 102 described above, it should be appreciated that substantially vertically stacked data points indicate the support plates 70, 72, 74 defining the lateral sections 78 of the basket assembly 54 and that data points between such support plates 70, 72, 74 (e.g., within the lateral sections 78) may generally be indicative of the bars 76, ground, and/or material accumulation.

When the field of view 104 of the plugging sensor 102 is aligned with the open spaces defined between adjacent bars 76, the plugging sensor 102 may detect surfaces past the bars 76, particularly the bottom of the basket assembly 54 or the ground surface. As particularly shown in FIG. 6A, the data points within the lateral sections 78 (between the support plates 70, 72, 74) are substantially all below the basket center 105. Generally, plugging conditions are more common when multiple data points are located above the basket center 105. As such, there is not a plugging condition across any portion of the basket assembly 54 in the dataset shown in FIG. 6A. In contrast, as shown in FIG. 6B, a significant number of the data points within one of the lateral sections 78 are above the basket center 105, which indicates that there is material accumulation within such lateral section 78 above the basket center 105. As such, it can be inferred that there is a plugging condition of occurring within this lateral section 78 of the basket assembly 54 shown in FIG. 6B. Such plugging condition may be confirmed by monitoring subsequent instances of time of the data being collected by the sensor 102.

FIGS. 7A and 7B generally show alternative data profiles generated from the sensor data. Particularly, FIGS. 7A and 7B each illustrate a set of data points associated with the sensor data collected for one lateral position (e.g., at a single point or location within one of the lateral sections 78) across a data collection period. As shown in FIG. 7A, the majority of the data points are either close to the top of the basket assembly 54 or are close to the bottom of the basket assembly 54. The data points close to the top of the basket assembly 54 correspond to the instances in which one of the bars 76 (i.e., a bar 76 at the top of the basket assembly 54) is rotated across the field of view 104 of the sensor 102.

The data points close to the bottom of the basket assembly 54 corresponding to the instances in which the detection signals 108 from the plugging sensor 102 are transmitted between adjacent bars 76 through the interior of the basket assembly 54 and reflected off of the ground or a bar 76 at the bottom of the basket assembly 54. As such, similar to FIG. 6A, it can be inferred that there is not a plugging condition of the basket 54 at that location along the basket assembly 54 during the time period in FIG. 7A.

In contrast, across the respective operational time period shown in FIG. 7B, the data points corresponding to instances in which the detection signals 108 from the plugging sensor 102 are transmitted between adjacent bars 76 show a trend as time progresses from being closer to the bottom of the basket assembly 54 to being closer to the top of the basket assembly 54 relative to the basket center 105. Such a trend detected during rotation of the basket assembly 54 provides a significant indicator of material accumulation relative to the basket assembly.

Referring now to FIG. 8, a schematic view of one embodiment of a system 100 for monitoring plugging of one or more basket assemblies of an agricultural implement is illustrated in accordance with aspects of the present subject matter. In general, the system 100 will be described with reference to the implement 10 shown in FIGS. 1 and 2 and the basket assembly 54 and associated system components shown in FIG. 3. However, in other embodiments, the disclosed system 100 may be utilized to identifying tool plugging in association with any other suitable agricultural implement having any other suitable implement configuration, any other suitable basket assembly having any other suitable basket configuration, any other tool or tool assembly (such as with the disc gang 44), and/or using system components having any other suitable component configuration(s).

As indicated above, in several embodiments, the system 100 may include one or more plugging sensors 102 installed relative to a basket assembly 54 such that each plugging sensor(s) 102 is configured to provide data indicative of a plugged condition of the basket assembly 54. Additionally, as indicated above, the system 100 may also include a controller 106 communicatively coupled to the plugging sensor(s) 102. As will be described in greater detail below, the controller 106 may be configured to analyze the return signals received by the plugging sensor(s) 102 and/or related data associated with such signals to infer or estimate the existence of material accumulation on and/or within the associated basket assembly 54. Additionally, the controller 106 may also be configured to execute one or more control actions in response to the determination that the basket assembly 54 is likely plugged or in the process of becoming plugged. For instance, in one embodiment, the controller 106 may notify the operator that the basket assembly 54 is plugged or is likely to become plugged in the near future. In addition to notifying the operator (or as an alternative thereto), the controller 106 may be configured to execute one or more automated control actions adapted to de-plug the basket assembly 54 or otherwise reduce the amount of material accumulation on and/or within the basket assembly 54, such as by automatically adjusting the speed of the implement 10 and/or the down force applied to the basket assembly 54 and/or by automatically raising and lowering the basket assembly 54 relative to the ground.

In general, the controller 106 may correspond to any suitable processor-based device(s), such as a computing device or any combination of computing devices. Thus, as shown in FIG. 8, the controller 106 may generally include one or more processor(s) 110 and associated memory devices 112 configured to perform a variety of computerimplemented functions (e.g., performing the methods, steps, algorithms, calculations and the like disclosed herein). As used herein, the term "processor" refers not only to integrated circuits referred to in the art as being included in a computer, but also refers to a controller, a microcontroller, a microcomputer, a programmable logic controller (PLC), an application specific integrated circuit, and other programmable circuits. Additionally, the memory 112 may generally comprise memory element(s) including, but not limited to, computer readable medium (e.g., random access memory (RAM)), computer readable non-volatile medium (e.g., a flash memory), a floppy disk, a compact disc-read only memory (CD-ROM), a magneto-optical disk (MOD), a digital versatile disc (DVD) and/or other suitable memory elements. Such memory 112 may generally be configured to store information accessible to the processor(s) 110, including data 114 that can be retrieved, manipulated, created and/or stored by the processor(s) 110 and instructions 116 that can be executed by the processor(s) 110.

In several embodiments, the data 114 may be stored in one or more databases. For example, the memory 112 may include a signal database 118 for storing the return signals received by the plugging sensor(s) 102 and/or data associated with the received signals. For instance, in addition to the return signals received by the plugging sensor(s) 102, data may be stored within the signal database 118 associated with the distance defined between the sensor(s) 102 and the detected surface. Moreover, when desired, the signal database 118 may also be used to store any modified or transformed sensor data, such as when it is desired to transform the distance data from being referenced relative to the sensor location to being referenced relative to the center 105 of the basket assembly 54 or any other suitable reference location.

Additionally, as shown in FIG. 8, the memory 112 may include a field parameter database 120 for storing information related to one or more parameters of the field being processed during the performance of the associated agricultural operation (e.g., a tillage operation). In one embodiment, soil condition data, such as moisture data associated with the moisture content or level of the soil within the field and/or soil type data, may be stored within the field parameter database 120. Depending on the soil conditions, the basket assembly 54 may be more prone to plugging. For instance, material accumulation is significantly more likely with higher soil moisture contents and/or with soil types that are prone to clumping. Accordingly, by using the soil condition data, the controller 106 may be configured to more accurately assess the return signals received by the plugging sensor(s) 102, require a different rate of sampling frequency, and/or may select more appropriate control actions.

It should be appreciated that the soil condition data may be correspond to preexisting or predetermined soil condition data stored within the field parameter database 120 or the soil condition data may correspond to sensor data that is being actively collected or generated during the performance of the associated agricultural operation. For instance, in one embodiment, the controller 106 may be provided with soil moisture data (e.g., in the form of a soil moisture map) that was collected during a previous agricultural operation or that was generated based on previously known data associated with the field conditions. Alternatively, a soil moisture sensor may be provided in operative association with the implement 10 or the towing vehicle 12 to allow the soil moisture to be actively monitored during the performance of the associated agricultural operation.

Referring still to FIG. 8, in several embodiments, the instructions 116 stored within the memory 112 of the controller 106 may be executed by the processor(s) 110 to implement an analysis module 122. In general, the analysis module 122 may be configured to analyze the return signals received by the plugging sensor(s) 102 and/or the related data (e.g., distance data) to estimate or infer when the associated basket assembly 54 is experiencing a plugged condition. Specifically, in several embodiments, the analysis module 122 may be configured to determine when the basket assembly 54 is experiencing a plugged condition by analyzing the data trace or profile of the data associated with the return signals received by the plugging sensor(s) 102.

The analysis module 122 may be configured to analyze the distance data associated with the return signals received by the plugging sensor(s) 102 by calculating a detection range metric for the associated plugging sensor 102. In one embodiment, the detection range metric may be indicative of a percentage of the detection signals transmitted from a given plugging sensor 102 that reach a given location within the interior of the basket assembly 54 (or that are within a given range of locations defined relative to such location within the interior of the basket assembly 54). In another embodiment, the detection range metric may be indicative of a corrected distance that the detection signals reach within the interior of the basket assembly 54 relative to a location within the interior of the basket assembly 54. The analysis module 122 may then be configured to determine when the basket assembly 54 is experiencing a plugged condition based at least in part on the detection range metric. For instance, the analysis module 122 may be configured to compare the calculated detection range metric to a predetermined threshold. In such an embodiment, it may be inferred or estimated that the basket assembly 54 is experiencing a plugged condition when the detection range metric crosses such predetermined threshold (e.g., by exceeding the threshold).

In a particular embodiment of the present subject matter, the detection range metric may be indicative of a percentage of detection signals over a given period of time that do not reach a given a location within the interior of the basket assembly 54. For instance, the analysis module 122 may be configured to calculate a plugging metric indicative of the percentage of detection signals that do not reach the basket center 105 within a lateral section 78 across a given time period (e.g., a time period of 1 second, 2 seconds, 3 seconds, and/or the like). In one embodiment, the plugging metric (PM) may be calculated using the following formula (Equation 1):

$$PM = \frac{(P_1 + P_2 \ldots + P_n)}{n} * 100 \qquad (1)$$

wherein, PM corresponds to the percentage of the detection signals that do not reach the basket center 105 within a lateral section 78 over a given sampling period, $n$ corresponds to the total number of samples within the lateral section 78 collected by the plugging sensor 105 over the sampling period given the sensor's sampling rate, and $P$ corresponds to an intermediate variable that is assigned a value of one (1) if the detection signal transmitted at such instance does not reach the basket center 105 and is assigned a value of zero (0) if the detection signal transmitted at such instance reaches or exceeds the distance to the basket center 105 within such predetermined radius (e.g., due to the signal being reflected off the basket bars 76 or accumulated material).

By utilizing the above-described metric, a higher PM percentage value indicates that a significant amount of the detection signals transmitted by the plugging sensor 102 are not able to reach the basket center 105, or a location within a given distance to the basket center, thereby indicating that the basket assembly 54 is likely in a plugged state. In contrast, a lower PM percentage value indicates that a smaller amount of the detection signals transmitted by the plugging sensor 102 were not able to reach the basket center, or a location within a given distance to the basket center, thereby indicating that the basket assembly 54 is likely in a non-plugged condition. In one embodiment, to assess the current PM percentage value calculated for a given plugging sensor 102, such value may be compared to a predetermined PM threshold indicative of the plugging condition. For instance, the PM threshold may be set to a given percentage value, such as a percentage ranging from about 60% to about 100%, or from about 70% to about 100%, or from about 80% to about 95%, or from about 85% to about 90%, and/or any other subranges therebetween. In such an embodiment, when the current PM percentage value calculated for a given plugging sensor 102 crosses or exceeds the predetermined PM threshold, it may be inferred or estimated that the basket assembly 54 is experiencing a plugged condition at the location along the basket assembly 54 for which the PM was determined. For instance, if the PM threshold is set as 90%, any PM percentage value above such threshold indicates that more than 90% of the detection signals transmitted from the associated plugging sensor 102 are currently not reaching the basket center 105 and that a plugging condition is very likely.

In another embodiment, the detection range metric may be indicative of a distance that the detection signals reach within the interior of the basket assembly 54 relative to a location within the interior of the basket assembly 54 over a given period of time. For instance, the analysis module 122 may be configured to calculate a standard deviation metric indicative of an adjusted distance or position that detection signals reach relative to the basket center 105 within a lateral section 78 across a given time period (e.g., a time period of 1 second, 2 seconds, 3 seconds, and/or the like). For example, the analysis module 122 may determine an average of the distances of the signals from the basket center 105 for a given lateral section 78 across a given time period or number of samples, with negative distances representing signals that reached below the basket center 105 and positive distances representing signals that did not reach the basket center 105. The analysis module 122 may further determine a standard deviation of such distances of the signals from the basket center 105 for the given lateral section 78 across the given time period or number of samples. The analysis module 122 may then subtract the standard deviation of such distances from the average of such distances to determine a standard deviation metric (SDM) for the given lateral section 78, which is equal to an adjusted distance from the basket center 105 within the given lateral section 78. In one embodiment, the standard deviation metric (SDM) may be calculated using the following formula (Equation 2):

$$SDM = \frac{D_1 + D_2 \ldots + D_n}{n} - SD(D_1, D_2, \ldots D_3) \qquad (2)$$

wherein, *SDM* corresponds to the adjusted distance of the detection signals relative to the basket center 105 within a lateral section 78 over a given sampling period, *D* corresponds to each distance of the sampled detection signals relative to the basket center 105 within the lateral section 78 collected by the plugging sensor 105 over the sampling period, and $SD(D_1, D_2, \ldots D_3)$ corresponds to a statistical measure, such as a standard deviation, of the distance samples within the lateral section 78 collected by the plugging sensor 105 over the sampling period.

By utilizing the above-described metric, a positive SDM value indicates that a significant amount of the detection signals transmitted by the plugging sensor 102 only reach above the basket center 105, with higher positive SDM values indicating a further distance from the basket center, thereby indicating that the basket assembly 54 is likely in a plugged state. In contrast, a negative SDM value indicates that more of the detection signals transmitted by the plugging sensor 102 reach below the basket center, with larger negative SDM values indicating that the detection signals reach closer to the bottom of the basket assembly 54, thereby indicating that the basket assembly 54 is likely in a non-plugged condition. In one embodiment, to assess the current SDM value calculated for a given plugging sensor 102, such value may be compared to a predetermined SDM threshold indicative of the plugging condition. For instance, the SDM threshold may be set to a given value, such as a value ranging from about 40 millimeters (mm) to about 100 mm, or from about 60 mm to about 100 mm, or from about 80 mm to about 95 mm, or from about 85 mm to about 90 mm, and/or any other subranges therebetween. In such an embodiment, when the current SDM value calculated for a given plugging sensor 102 crosses or exceeds the predetermined SDM threshold, it may be inferred or estimated that the basket assembly 54 is experiencing a plugged condition at the location along the basket assembly 54 for which the SDM was determined. For instance, if the SDM threshold is set as 80 mm, any SDM value above such threshold indicates that the detection signals transmitted from the associated plugging sensor 102 are being reflected at an adjusted distance of 80 mm or more from the basket center 105 and that a plugging condition is very likely.

Additionally or alternatively, the plugging metric may be indicative of or include a level of confidence in the determination of the plugging condition. For instance, a standard deviation of the data points may be used to determine whether the data collected is reliable (i.e., within an allowable tolerance threshold).

It should be appreciated that other analysis methods may be used to determine a plugging condition of the basket assembly 54. For instance, other percentages, moving averages, multi-variable statistical methods (e.g., analysis of variances (ANOVAs), etc.), and/or the like may be used in addition to or alternative to the methods described above.

As indicated above, in one embodiment, the system 100 may include a plurality of plugging sensors 102, with at least one plugging sensor 102 being aligned with each basket assembly 54 to allow material accumulation to be detected across basket assembly 54. In such an embodiment, the analysis module 122 may be configured to analyze the return signals and/or associated signal data received by each plugging sensor 102 on a section-by-section basis across the field of view 104 to determine whether a plugged condition exists within the localized areas or lateral sections 78 being detected by each plugging sensor 102.

Referring still to FIG. 8, the instructions 116 stored within the memory 112 of the controller 106 may also be executed by the processor(s) 110 to implement a control module 124. In general, the control module 124 may be configured to initiate a control action when it is determined that a basket assembly of an agricultural implement is experiencing a plugged condition. As indicated above, in one embodiment, the control module 124 may be configured to provide a notification to the operator of the vehicle/implement 12/10 indicating that material accumulation is present on or within one or more of the basket assemblies 54 of the implement 10. For instance, in one embodiment, the control module 124 may cause a visual or audible notification or indicator to be presented to the operator via an associated user interface 126 provided within the cab 22 of the vehicle 10.

In other embodiments, the control module 124 may be configured to execute an automated control action designed to adjust the operation of the implement 10. For instance, in one embodiment, the controller 106 may be configured to increase or decrease the operational or ground speed of the implement 10 in an attempt to reduce the amount of material accumulation and/or to limit further material accumulation. For instance, as shown in FIG. 8, the controller 106 may be communicatively coupled to both the engine 24 and the transmission 26 of the work vehicle 12. In such an embodiment, the controller 106 may be configured to adjust the operation of the engine 24 and/or the transmission 26 in a manner that increases or decreases the ground speed of the work vehicle 12 and, thus, the ground speed of the implement 10, such as by transmitting suitable control signals for controlling an engine or speed governor (not shown) associated with the engine 24 and/or transmitting suitable control signals for controlling the engagement/disengagement of one or more clutches (not shown) provided in operative association with the transmission 26. It should be appreciated that controller 106 may also be configured to decrease the ground speed in a manner that brings vehicle/implement 12/10 to a complete stop.

In addition to the adjusting the ground speed of the vehicle/implement 12, 10 (or as an alternative thereto), the controller 106 may also be configured to adjust an operating parameter associated with the ground-engaging tools of the implement 10. For instance, as shown in FIG. 8, the controller 106 may be communicatively coupled to one or more valves 128 configured to regulate the supply of fluid (e.g., hydraulic fluid or air) to one or more corresponding actuators of the implement 10, such as the basket actuators 66. In such an embodiment, by regulating the supply of fluid to the actuator(s) 66, the controller 106 may automatically adjust the down force or down pressure applied to the associated basket assembly 54. Additionally, the controller 106 may control the operation of the basket actuator 66 to raise and lower the associated basket assembly 54 relative to the ground.

Moreover, as shown in FIG. 8, the controller 106 may also include a communications interface 130 to provide a means for the controller 106 to communicate with any of the various other system components described herein. For instance, one or more communicative links or interfaces 132 (e.g., one or more data buses) may be provided between the communications interface 130 and the plugging sensor(s) 102 to allow the signals received by the plugging sensor(s) 102 (and/or related signal data) to be transmitted to the controller 106. Similarly, one or more communicative links or interfaces 134 (e.g., one or more data buses) may be provided between the communications interface 134 and the engine 24, the transmission 26, the user interface 126, the control valves 128, and/or the like to allow the controller 106 to control the operation of and/or otherwise communicate with such system components.

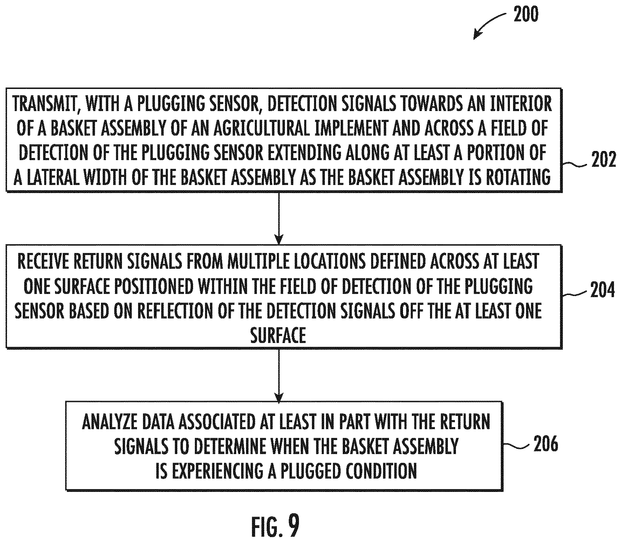

Referring now to FIG. 9, a flow diagram of one embodiment of a method 200 for monitoring plugging of basket assemblies of an agricultural implement is illustrated in accordance with aspects of the present subject matter. In general, the method 200 will be described herein with reference to the agricultural implement 10, the basket assembly 54, and the system 100 described above with reference to FIGS. 1-3 and 8. However, it should be appreciated by those of ordinary skill in the art that the disclosed method 200 may generally be implemented with any agricultural implement having any suitable implement configuration, any basket assembly having any suitable basket configuration, and/or any system having any suitable system configuration. In addition, although FIG. 9 depicts steps performed in a particular order for purposes of illustration and discussion, the methods discussed herein are not limited to any particular order or arrangement. One skilled in the art, using the disclosures provided herein, will appreciate that various steps of the methods disclosed herein can be omitted, rearranged, combined, and/or adapted in various ways without deviating from the scope of the present disclosure.

As shown in FIG. 9, at (202), the method 200 may include transmitting, with a plugging sensor, detection signals towards an interior of a basket assembly of an agricultural implement and across a field of detection of the plugging sensor extending along at least a portion of a lateral width of the basket assembly as the basket assembly is rotating. For example, as indicated above, one or more plugging sensors 102 may be installed relative to a basket assembly 54 of an agricultural implement 10, with each plugging sensor 102 being configured to transmit detection signals 108 along a field of view 104 towards the interior of the basket assembly 54. Particularly, the field of view 104 of the plugging sensor 102 may extend laterally across at least a portion of a lateral width of the basket assembly 54.

Additionally, at (204), the method 200 may include receiving return signals from multiple locations defined across at least one surface positioned within the field of detection of the plugging sensor based on reflection of the detection signals off the at least one surface. Specifically, as indicated above, the detection signals 108 transmitted from the plugging sensor 102 may reflect off multiple locations across a given surface (e.g., the outer surface of the bars 76 of the associated basket assembly 54 and/or the surface(s) of the accumulated field materials) positioned within the field of view 104 of the plugging sensor 102 and be subsequently detected as return signals 109 associated with the multiple locations by the plugging sensor 102.

Moreover, as shown in FIG. 9, at (206), the method 200 may include analyzing data associated at least in part with the return signals to determine when the basket assembly is experiencing a plugged condition. For instance, as indicated above, the controller 106 may be configured to infer or estimate that a basket assembly 54 is experiencing a plugged condition by comparing a calculated metric (e.g., a detection range metric, such as the plugging metric or the standard deviation metric described above) to a predetermined threshold.

It is to be understood that the steps of the method 200 are performed by the controller 106 upon loading and executing software code or instructions which are tangibly stored on a tangible computer readable medium, such as on a magnetic medium, e.g., a computer hard drive, an optical medium, e.g., an optical disc, solid-state memory, e.g., flash memory, or other storage media known in the art. Thus, any of the functionality performed by the controller 106 described herein, such as the method 200, is implemented in software code or instructions which are tangibly stored on a tangible computer readable medium. The controller 106 loads the software code or instructions via a direct interface with the computer readable medium or via a wired and/or wireless network. Upon loading and executing such software code or instructions by the controller 106, the controller 106 may perform any of the functionality of the controller 106 described herein, including any steps of the method 200 described herein.

The term "software code" or "code" used herein refers to any instructions or set of instructions that influence the operation of a computer or controller. They may exist in a computer-executable form, such as machine code, which is the set of instructions and data directly executed by a computer's central processing unit or by a controller, a human-understandable form, such as source code, which may be compiled in order to be executed by a computer's central processing unit or by a controller, or an intermediate form, such as object code, which is produced by a compiler. As used herein, the term "software code" or "code" also includes any human-understandable computer instructions or set of instructions, e.g., a script, that may be executed on the fly with the aid of an interpreter executed by a computer's central processing unit or by a controller.

**Claims**

1. A system (100) for monitoring basket plugging for agricultural implements, the system (100) comprising a basket assembly (54) configured to be supported by an agricultural implement (10), the basket assembly (54) defining a lateral width between opposed lateral ends (70, 72) of the basket assembly (54), the system (100) being **characterized by**:

   a plugging sensor (102) positioned relative to the basket assembly (54) such that the plugging sensor (102) is configured to transmit detection signals (108) across a field of detection (104) towards an interior of the basket assembly (54) and receive return signals (109) based on reflection of the detection signals (108) off at least one surface, the field of detection (104) extending laterally across at least a portion of the lateral width of the basket assembly (54) such that the plugging sensor (102) transmits the detection signals (108) towards multiple locations defined along the at least a portion of the lateral width of the basket assembly (54); and
   a controller (106) communicatively coupled to the plugging sensor (102), the controller (106) configured to analyze data received from the plugging sensor (102) as the basket assembly (54) rotates relative to the plugging sensor (102) to determine when the basket assembly (54) is experiencing a plugged condition.

2. The system (100) as in claim 1, wherein the controller (106) is configured to calculate a detection range metric determined relative to a given location within the interior of the basket assembly (54) and to determine when the basket assembly (54) is experiencing the plugged condition based at least in part on the detection range metric.

3. The system (100) as in claim 2, wherein the detection range metric is indicative of a percentage of the detection signals (108) that reach at least one of the given location within the interior of the basket assembly (54) or a range of locations defined relative to the given location within the interior of the basket assembly (54).

4. The system (100) as in claim 2, wherein the detection range metric is indicative of an adjusted distance of the detection signals (108) from the location within the interior of the basket assembly (54), the adjusted distance being determined as a function of a statistical measure of distances of the detection signals (108) from the location within the interior of the basket assembly (54).

5. The system (100) as in claim 2, wherein the given location comprises a center (105) of the basket assembly (54).

**6.** The system (100) as in any of the claims 2-5, wherein the controller (106) is configured to compare the calculated detection range metric to a predetermined threshold, the controller (106) being configured to determine that the basket assembly (54) is experiencing the plugged condition when the detection range metric crosses the predetermined threshold.

**7.** The system (100) as in any of the claims 2-6, wherein the basket assembly (54) comprises a plurality of spaced apart bars (76) surrounding the interior of the basket, each of the plurality of spaced apart bars (76) passing through the field of detection (104) within which the detection signals (108) are transmitted towards the interior of the basket assembly (54) as the basket assembly (54) is being rotated.

**8.** The system (100) as in claim 7, wherein the detection signals (108) alternate between reflecting off of the plurality of spaced apart bars (76) and being transmitted between adjacent bars (76) of the plurality of spaced apart bars (76) into the interior of the basket assembly (54).

**9.** The system (100) as in claim 1, wherein the basket assembly (54) comprises a plurality of lateral basket sections (78), with each lateral basket section (78) being defined between adjacent support plates (72, 74) of the basket assembly (54), and wherein the plugging sensor (102) is positioned relative to the basket assembly (54) such that the plugging sensor (102) is configured to transmit detection signals (108) across the field of detection (104) towards a portion of the interior of the basket assembly (54) defined by at least two lateral basket sections (78) of the plurality of lateral basket sections (78).

**10.** The system (100) as in claim 9, wherein the controller (106) is further configured to determine when a given lateral basket section (78) of the plurality of lateral basket sections (78) is experiencing a plugged condition by analyzing the data received from the plugging sensor (102) transmitting detection signals (108) towards the portion of the interior of the basket assembly (54) defined by such lateral basket section (78).

**11.** The system (100) as in any of the preceding claims, wherein the plugging sensor (102) comprises at least one of a LIDAR sensor or a multi-ray LED sensor.

**12.** A method (200) for monitoring plugging of basket assemblies of agricultural implements, the method (200) being **characterized by**:

transmitting, with a plugging sensor (102), detection signals (108) towards an interior of a basket assembly (54) of an agricultural implement (10), towards multiple locations defined along the at least a portion of the lateral width of the basket assembly (54) and across a field of detection (104) of the plugging sensor (102) extending along the at least a portion of a lateral width of the basket assembly (54) as the basket assembly (54) is rotating; receiving return signals (109) from multiple locations defined across at least one surface positioned within the field of detection (104) of the plugging sensor (102) based on reflection of the detection signals (108) off the at least one surface; and analyzing, with a computing device, data associated at least in part with the return signals (109) to determine when the basket assembly (54) is experiencing a plugged condition.

**13.** The method of claim 12, further comprising controlling an operation of the agricultural implement (10) to adjust an operating parameter associated with the agricultural implement (10) when it is identified that the basket assembly (54) is experiencing the plugged condition.

**14.** The method as in claim 12 or 13, further comprising notifying an operator of the agricultural implement (10) when it is identified that the basket assembly (54) is experiencing the plugged condition.

**15.** The method as in any of claims 12-14, further comprising determining a detection range metric determined relative to a given location within the interior of the basket assembly (54), wherein analyzing the data received from the plugging sensor (102) comprises comparing the detection range metric to a predetermined threshold to determine when the basket assembly (54) is experiencing the plugged condition.

**Patentansprüche**

**1.** System (100) zur Überwachung des Verstopfens von Walzen für landwirtschaftliche Arbeitsgeräte, wobei das System (100) eine Walzenanordnung (54) aufweist, die dazu eingerichtet ist, von einem landwirtschaftlichen Arbeitsgerät (10) getragen zu werden, wobei die Walzenanordnung (54) eine Breite in Querrichtung zwischen gegenüberliegenden seitlichen Enden (70, 72) der Walzenanordnung (54) definiert,

wobei das System (100) **gekennzeichnet ist durch**:

einen Verstopfungs-Sensor (102), der relativ zur Walzenanordnung (54) derart angeordnet ist, dass der Verstopfungs-Sensor (102) dazu eingerichtet ist, Detektionssignale (108) über einen Detektionsbereich (104) in Richtung eines Inneren der Walzenanordnung (54) zu übertragen und Antwortsignale (109), die auf einer Reflexion der Detektionssignale (108) von mindestens einer Oberfläche basieren, zu erhalten, wobei sich der Detektionsbereich (104) in Querrichtung über mindestens einen Abschnitt der Breite in Querrichtung der Walzenanordnung (54) derart erstreckt, dass der Verstopfungs-Sensor (102) die Detektionssignale (108) in Richtung einer Mehrzahl von Stellen, die entlang mindestens eines Abschnitts der Breite in Querrichtung der Walzenanordnung (54) definiert sind, überträgt; und

eine Steuereinrichtung (106), die mit dem Verstopfungs-Sensor (102) in Kommunikationsverbindung steht, wobei die Steuereinrichtung (106) dazu eingerichtet ist, Daten zu analysieren, die von dem Verstopfungs-Sensor (102) empfangen werden, wenn sich die Walzenanordnung relativ zu dem Verstopfungs-Sensor (102) dreht, um festzustellen, wenn die Walzenanordnung (54) eine verstopften Zustand erfährt.

2. System (100) nach Anspruch 1, wobei die Steuereinrichtung (106) dazu eingerichtet ist, eine Detektionsbereichskennzahl zu berechnen, die in Bezug auf eine vorbestimmte Stelle im Inneren der Walzenanordnung (54) bestimmt wird, und zumindest teilweise basierend auf der Detektionsbereichskennzahl festzustellen, wenn die Walzenanordnung (54) den verstopften Zustand erfährt.

3. System (100) nach Anspruch 2, wobei die Detektionsbereichskennzahl charakteristisch ist für einen prozentualen Anteil der Detektionssignale (108), die mindestens eine der vorbestimmten Stellen im Inneren der Walzenanordnung (54) oder einen Bereich von Stellen erreichen, der relativ zur vorbestimmten Stelle im Inneren der Walzenanordnung (54) definiert ist.

4. System (100) nach Anspruch 2, wobei die Detektionsbereichskennzahl charakteristisch ist für einen korrigierten Abstand der Detektionssignale (108) von der Stelle im Inneren der Walzenanordnung (54), wobei der korrigierte Abstand in Abhängigkeit einer statistischen Messung von Abständen der Detektionssignale (108) von der Stelle im Inneren der Walzenanordnung (54) ermittelt wird.

5. System (100) nach Anspruch 2, wobei die vorbestimmte Stelle einen Mittelpunkt (105) der Walzenanordnung (54) umfasst.

6. System (100) nach einem der Ansprüche 2 bis 5, wobei die Steuereinrichtung (106) dazu eingerichtet ist, die berechnete Detektionsbereichskennzahl mit einem vorbestimmten Grenzwert zu vergleichen, wobei die Steuereinrichtung (106) dazu eingerichtet ist, festzustellen, dass sich die Walzenanordnung (54) im verstopften Zustand befindet, wenn die Detektionsbereichskennzahl den vorbestimmten Grenzwert übersteigt.

7. System (100) nach einem der Ansprüche 2 bis 6, wobei die Walzenanordnung (54) eine Mehrzahl von beabstandeten Stäben (76) aufweist, die das Innere der Walze umgeben, wobei sich jeder der Mehrzahl von beabstandeten Stäben (76) durch den Detektionsbereich (104) erstreckt, in dem die Detektionssignale (108) in Richtung zum Inneren der Walzenanordnung (54) übertragen werden, wenn die Walzenanordnung (54) in Drehung versetzt wird.

8. System (100) nach Anspruch 7, wobei die Detektionssignale (108) abwechselnd von der Mehrzahl von beabstandeten Stäben (76) reflektiert werden und zwischen benachbarten Stäben (76) der Mehrzahl von beabstandeten Stäben (76) in das Innere der Walzenanordnung (54) übertragen werden.

9. System (100) nach Anspruch 1, wobei die Walzenanordnung (54) eine Mehrzahl von Walzen-Querabschnitten (78) aufweist, wobei jeder Walzen-Querabschnitt (78) zwischen benachbarten Halteplatten (72, 74) der Walzenanordnung (54) definiert ist, und wobei der Verstopfungs-Sensor (102) relativ zur Walzenanordnung (54) derart angeordnet ist, dass der Verstopfungs-Sensor (102) dazu eingerichtet ist, Detektionssignale (108) über den Detektionsbereich (104) in Richtung eines Abschnitts des Inneren der Walzenanordnung (54) zu übertragen, der durch mindestens zwei Walzen-Querabschnitte (78) der Mehrzahl von Walzen-Querabschnitten (78) definiert ist.

10. System (100) nach Anspruch 9, wobei die Steuereinrichtung (106) weiterhin dazu eingerichtet ist, festzustellen, ob sich ein vorbestimmter Walzen-Querabschnitt (78) der Mehrzahl von Walzen-Querabschnitten (78) im verstopften Zustand befindet, indem Daten analysiert werden, die von dem Verstopfungs-Sensor (102) erhalten werden, der Detektionssignale (108) in Richtung des Abschnitts des Inneren der Walzenanordnung (54), der durch diesen Walzen-Querabschnitt (78) definiert ist, überträgt.

**11.** System (100) nach einem der vorhergehenden Ansprüche, wobei der Verstopfungs-Sensor (102) einen LIDAR-Sensor und/oder einen Multi-Ray-LED-Sensor aufweist.

**12.** Verfahren (200) zur Überwachung des Verstopfens von Walzenanordnungen von landwirtschaftlichen Arbeitsgeräten, wobei das Verfahren (200) **gekennzeichnet ist durch**:

Übertragen, mittels eines Verstopfungs-Sensors (102), von Detektionssignalen (108) in Richtung eines Inneren einer Walzenanordnung (54) eines landwirtschaftlichen Arbeitsgeräts (10) in Richtung mehrerer Stellen, die entlang des mindestens einen Abschnitts der Breite in Querrichtung der Walzenanordnung (54) definiert sind, und über einen Detektionsbereich (104) des Verstopfungs-Sensors (102), der sich entlang des mindestens einen Abschnitts einer Breite in Querrichtung der Walzenanordnung (54) erstreckt, wenn sich die Walzenanordnung (54) dreht;

Erhalten von Antwortsignalen (109) von einer Mehrzahl von Stellen, die **durch** mindestens eine Oberfläche definiert sind, die in dem Detektionsbereich (104) des Verstopfungs-Sensors (102) angeordnet ist, basierend auf einer Reflexion der Detektionssignale (108) an der mindestens einen Oberfläche; und

Analysieren, mittels einer Computer-Einrichtung, von Daten, die zumindest teilweise den Antwortsignalen (109) zugeordnet sind, um festzustellen, wenn die Walzenanordnung (54) einen verstopften Zustand erfährt.

**13.** Verfahren nach Anspruch 12, weiterhin aufweisend das Steuern eines Betriebs des landwirtschaftlichen Arbeitsgeräts (10), um einen Betriebsparameter einzustellen, der dem landwirtschaftlichen Arbeitsgerät (10) zugeordnet ist, wenn festgestellt wird, dass sich die Walzenanordnung (54) in einem verstopften Zustand befindet.

**14.** Verfahren nach Anspruch 12 oder 13, weiterhin aufweisend das Benachrichtigen eines Bedieners des landwirtschaftlichen Arbeitsgeräts (10), wenn festgestellt wird, dass sich die Walzenanordnung (54) in einem verstopften Zustand befindet.

**15.** Verfahren nach einem der Ansprüche 12 bis 14, weiterhin aufweisend das Bestimmen einer Detektionsbereichskennzahl, die relativ zu einer vorbestimmten Stelle im Inneren der Walzenanordnung (54) bestimmt wird, wobei das Analysieren der Daten, die von dem Verstopfungs-Sensor (102) erhalten werden, das Vergleichen der Detektionsbereichskennzahl mit einem vorbestimmten Grenzwert umfasst, um festzustellen, ob sich die Walzenanordnung (54) in einem verstopften Zustand befindet.

## Revendications

**1.** Système (100) de surveillance du colmatage de panier d'outils agricoles, le système (100) comprenant un ensemble à panier (54) configuré pour être supporté par un outil agricole (10), l'ensemble à panier (54) définissant une largeur latérale entre les extrémités latérales opposées (70, 72) de l'ensemble à panier (54), le système (100) étant **caractérisé par** :

un capteur de colmatage (102) positionné par rapport à l'ensemble à panier (54) de telle sorte que le capteur de colmatage (102) soit configuré pour transmettre des signaux de détection (108) à travers un champ de détection (104) vers l'intérieur de l'ensemble à panier (54) et recevoir des signaux de retour (109) basés sur la réflexion des signaux de détection (108) sur au moins une surface, le champ de détection (104) s'étendant latéralement sur au moins une partie de la largeur latérale de l'ensemble à panier (54) de sorte que le capteur de colmatage (102) transmette les signaux de détection (108) vers plusieurs emplacements définis le long de l'au moins une partie de la largeur latérale de l'ensemble à panier (54) ; et

un dispositif de commande (106) couplé en communication au capteur de colmatage (102), le dispositif de commande (106) étant configuré pour analyser les données reçues du capteur de colmatage (102) lorsque l'ensemble à panier (54) tourne par rapport au capteur de colmatage (102) afin de déterminer quand l'ensemble à panier (54) passe par un état de colmatage.

**2.** Système (100) selon la revendication 1, dans lequel le dispositif de commande (106) est configuré pour calculer une mesure de la plage de détection déterminée par rapport à un emplacement donné à l'intérieur de l'ensemble à panier (54) et pour déterminer quand l'ensemble panier (54) passe par un état de colmatage, en se basant au moins en partie sur la mesure de la plage de détection.

3. Système (100) selon la revendication 2, dans lequel la mesure de la plage de détection indique un pourcentage des signaux de détection (108) qui atteignent au moins l'un des emplacements donnés à l'intérieur de l'ensemble à panier (54) ou une série d'emplacements définis par rapport à l'emplacement donné à l'intérieur de l'ensemble à panier (54).

4. Système (100) selon la revendication 2, dans lequel la mesure de la plage de détection indique une distance ajustée des signaux de détection (108) par rapport à l'emplacement à l'intérieur de l'ensemble à panier (54), la distance ajustée étant déterminée en fonction d'une mesure statistique des distances des signaux de détection (108) par rapport à l'emplacement à l'intérieur de l'ensemble à panier (54).

5. Système (100) selon la revendication 2, dans lequel l'emplacement donné comprend un centre (105) de l'ensemble à panier (54).

6. Système (100) selon l'une quelconque des revendications 2 à 5, dans lequel le dispositif de commande (106) est configuré pour comparer la mesure de la plage de détection calculée à un seuil prédéterminé, le dispositif de commande (106) étant configuré pour déterminer que l'ensemble à panier (54) passe par l'état de colmatage lorsque la mesure de la plage de détection franchit le seuil prédéterminé.

7. Système (100) selon l'une quelconque des revendications 2 à 6, dans lequel l'ensemble à panier (54) comprend plusieurs barres espacées (76) entourant l'intérieur du panier, chacune des plusieurs barres espacées (76) traversant le champ de détection (104) dans lequel les signaux de détection (108) sont transmis vers l'intérieur de l'ensemble à panier (54) lors de la mise en rotation de l'ensemble à panier (54).

8. Système (100) selon la revendication 7, dans lequel les signaux de détection (108) alternent entre la réflexion sur les plusieurs barres espacées (76) et la transmission entre les barres adjacentes (76) des plusieurs barres espacées (76) à l'intérieur de l'ensemble à panier (54).

9. Système (100) selon la revendication 1, dans lequel l'ensemble à panier (54) comprend plusieurs sections de panier latérales (78), chaque section de panier latérale (78) étant définie entre des plaques de support adjacentes (72, 74) de l'ensemble à panier (54), et dans lequel le capteur de colmatage (102) est positionné par rapport à l'ensemble à panier (54) de sorte que le capteur de colmatage (102) soit configuré pour transmettre des signaux de détection (108) à travers le champ de détection (104) vers une partie de l'intérieur de l'ensemble à panier (54) définie par au moins deux sections de panier latérales (78) des plusieurs sections de panier latérales (78).

10. Système (100) selon la revendication 9, dans lequel le dispositif de commande (106) est en outre configuré pour déterminer lorsqu'une section de panier latérale donnée (78) des plusieurs sections de panier latérales (78) passent par un état de colmatage en analysant les données reçues du capteur de colmatage (102) transmettant des signaux de détection (108) vers la partie de l'intérieur de l'ensemble à panier (54) définie par une telle section de panier latérale (78).

11. Système (100) selon l'une quelconque des revendications précédentes, dans lequel le capteur de colmatage (102) comprend au moins un capteur LIDAR ou un capteur LED à rayons multiples.

12. Procédé (200) de surveillance du colmatage des ensembles à panier d'outils agricoles, le procédé (200) étant **caractérisé par**:

la transmission, à l'aide d'un capteur de colmatage (102), des signaux de détection (108) vers l'intérieur d'un ensemble à panier (54) d'un outil agricole (10), vers plusieurs emplacements définis le long de l'au moins une partie de la largeur latérale de l'ensemble à panier (54) et à travers un champ de détection (104) du capteur de colmatage (102) s'étendant le long de l'au moins une partie d'une largeur latérale de l'ensemble à panier (54) lorsque l'ensemble à panier (54) tourne ;
la réception des signaux de retour (109) provenant de plusieurs emplacements définis sur au moins une surface située dans le champ de détection (104) du capteur de colmatage (102) en fonction de la réflexion des signaux de détection (108) sur au moins une surface ; et

l'analyse, à l'aide d'un dispositif informatique, les données associées au moins en partie aux signaux de retour (109) afin de déterminer si l'ensemble panier (54) passe par un état de colmatage.

13. Procédé selon la revendication 12, comprenant en outre la commande d'une opération de l'outil agricole (10) pour régler un paramètre de fonctionnement associé à l'outil agricole (10) lorsqu'il est reconnu que l'ensemble à panier (54) passe par l'état de colmatage.

14. Procédé selon la revendication 12 ou 13, comprenant en outre l'avertissement envoyé à l'opérateur de l'outil agricole (10) lorsque qu'il est reconnu que l'ensemble à panier (54) passe par l'état de colmatage.

15. Procédé selon l'une quelconque des revendications 12 à 14, comprenant en outre la détermination d'une mesure de la plage de détection déterminée par rapport à un emplacement donné à l'intérieur de l'ensemble à panier (54), dans lequel l'analyse des données reçues du capteur de colmatage (102) comprend la comparaison de la mesure de la plage de détection à un seuil prédéterminé pour déterminer le moment où l'ensemble à panier (54) passe par l'état de colmatage.

FIG. 1

FIG. 2

FIG. 3

FIG. 4A

FIG. 4B

FIG. 5A

FIG. 5B

FIG. 6A

FIG. 6B

FIG. 7A

FIG. 7B

FIG. 8

EP 3 808 162 B1

~ 200

TRANSMIT, WITH A PLUGGING SENSOR, DETECTION SIGNALS TOWARDS AN INTERIOR OF A BASKET ASSEMBLY OF AN AGRICULTURAL IMPLEMENT AND ACROSS A FIELD OF DETECTION OF THE PLUGGING SENSOR EXTENDING ALONG AT LEAST A PORTION OF A LATERAL WIDTH OF THE BASKET ASSEMBLY AS THE BASKET ASSEMBLY IS ROTATING ~ 202

RECEIVE RETURN SIGNALS FROM MULTIPLE LOCATIONS DEFINED ACROSS AT LEAST ONE SURFACE POSITIONED WITHIN THE FIELD OF DETECTION OF THE PLUGGING SENSOR BASED ON REFLECTION OF THE DETECTION SIGNALS OFF THE AT LEAST ONE SURFACE ~ 204

ANALYZE DATA ASSOCIATED AT LEAST IN PART WITH THE RETURN SIGNALS TO DETERMINE WHEN THE BASKET ASSEMBLY IS EXPERIENCING A PLUGGED CONDITION ~ 206

FIG. 9

**EP 3 808 162 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3011815 A1